# EUROPÄISCHE PATENTSCHRIFT

(11) **EP 3 631 247 B1**
(45) Veröffentlichungstag und Bekanntmachung des Hinweises auf die Patenterteilung: **24.08.2022**
(21) Anmeldenummer: 18722938.0
(22) Anmeldetag: 26.04.2018
(51) Int. Cl.: F16H 57/08, F16H 1/46, F16H 57/00, B60G 21/055

(54) **MONTAGEEINHEIT FÜR EIN MEHRSTUFIGES PLANETENGETRIEBE**
MOUNTING UNIT FOR A PLANETARY GEARBOX
UNITÉ DE MONTAGE POUR UNE BOÎTE DE VITESSES À TRAINS ÉPICYCLOÏDAUX À PLUSIEURS ÉTAGES

(30) Priorität: 31.05.2017 DE 102017209146
(43) Veröffentlichungstag der Anmeldung: 08.04.2020
(73) Patentinhaber: ZF Friedrichshafen AG, 88046 Friedrichshafen (DE)
(72) Erfinder: MAIR, Ulrich, 88046 Friedrichshafen (DE); SCHWARZE, Rene, 49434 Vörden (DE); SREEPRAKASH, Nithin, 88048 Friedrichshafen (DE)
(74) Vertreter: ZF Friedrichshafen AG
(86) Internationale Anmeldenummer: PCT/EP2018/060769
(87) Internationale Veröffentlichungsnummer: WO 2018/219563

(56) Entgegenhaltungen:
- WO-A1-2013/034123
- DE-A1-102015 206 063
- DE-U1-202012 005 741
- RO-B1- 106 157

## Beschreibung

Die vorliegende Erfindung betrifft eine Montageeinheit zum Einsetzen in ein Gehäuse eines mehrstufigen Planetengetriebes, insbesondere eines Wankstabilisators eines Kraftfahrzeugs, gemäß der im Oberbegriff des Patentanspruchs 1 näher definierten Art.

Bei der Montage eines mehrstufigen Planetengetriebes - insbesondere mit einem langen, für mehrere Planetenstufen vorgesehenen Hohlrad - müssen die Planetenstufen einzeln in das Hohlrad eingeführt werden. Hierbei müssen die Verzahnungen so ausgerichtet werden, dass die Zahnräder der Planetenräder nicht gegen die Zahnräder des Hohlrades stoßen. Dieser Prozess ist zeitaufwändig und birgt ferner die Gefahr in sich, dass die Zahnräder bei der Montage beschädigt werden.

Aus DE 20 2012 005 741 U1 ist eine Montageeinheit gemäß den Merkmalen des Oberbegriffs des Anspruchs 1 bekannt, die zum Einsetzen in ein Gehäuse eines Planetengetriebes geeignet ist. Die Planetenräder der Abtriebsstufe des Planetengetriebes sind zweigeteilt und vorspannbar ausgeführt, um eine Reduzierung des axialen wie des rotatorischen Spiels zu erzielen.

Aufgabe der vorliegenden Erfindung ist es, die Montage eines mehrstufigen Planetengetriebes weiter zu verbessern und/oder die Verzahnungen bei der Montage vor Beschädigung zu schützen.

Die der Erfindung zu Grunde liegende Aufgabe wird durch die Merkmale der unabhängigen Patentansprüche gelöst. Weitere vorteilhafte Ausgestaltungen ergeben sich aus den Unteransprüchen und den Zeichnungen.

Es wird eine Montageeinheit zum Einsetzen in ein Gehäuse eines mehrstufigen Planetengetriebes, insbesondere eines Wankstabilisators eines Kraftfahrzeugs, vorgeschlagen. Die Montageeinheit umfasst zumindest zwei Zahnradgruppen. Unter dem Begriff "Zahnradgruppe" ist eine Einheit aus mehreren Bestandteilen zumindest einer Planetenstufe zu verstehen, wobei die Bestandteile zumindest in Axialrichtung ortsfest miteinander verbundenen sind. Die Bestandteile einer Planetenstufe sind zumindest ein Planetenträger, Planetenräder und ein Sonnenrad, wobei das Sonnenrad verdrehfest auf dem Planetenträger angeordnet ist. Eine erste Zahnradgruppe der Montageeinheit umfasst einen ersten Planetenträger und mehrere in dem ersten Planetenträger drehbar gelagerte erste Planetenräder. Eine zweite Zahnradgruppe der Montageeinheit umfasst ein mit den ersten Planetenrädern kämmendes erstes Sonnenrad und einen drehfest mit dem ersten Sonnenrad verbundenen zweiten Planetenträger. Die erste Zahnradgruppe weist zumindest einen Federmechanismus auf. Der Federmechanismus ist derart ausgebildet, dass dieser die beiden Zahnradgruppen im Bereich der ineinandergreifenden Verzahnungen des ersten Sonnenrades und zumindest eines der ersten Planetenräder derart miteinander verspannt, dass die beiden Zahnradgruppen in Axialrichtung der Montageeinheit kraftschlüssig miteinander verbunden sind. Infolgedessen ist der erste Planetenträger der ersten Zahnradgruppe mit dem zweiten Planetenträger der zweiten Zahnradgruppe mittelbar, nämlich über das erste Sonnenrad und das mit diesem kraftschlüssig verbundene zumindest eine erste Planetenrad, in Axialrichtung lösbar verbunden. Die erste und zweite Zahnradgruppe sind somit in Axialrichtung mittels Kraftschluss lösbar miteinander verbunden und können infolgedessen gemeinsam als Montageeinheit in das dafür vorgesehene Gehäuse des mehrstufigen Planetengetriebes eingesetzt werden. Vorzugsweise sind hierfür die Verzahnungen der ersten und zweiten Planetenräder zueinander in Umfangsrichtung ausgerichtet, so dass diese in ein gemeinsames Hohlrad problemlos eingeführt werden können. Hierdurch kann eine sehr schnelle Montage des Planetengetriebes sichergestellt werden. Des Weiteren kann vermieden werden, dass die Verzahnungen der Planetenräder stirnseitig Zahn auf Zahn auf die Verzahnung des Hohlrades stoßen, wodurch diese beschädigt werden könnten. Infolgedessen ist eine beschädigungsfreie und schnelle Montage gewährleistet.

Vorteilhaft ist es, wenn der Federmechanismus zumindest einem einzelnen Planetenrad zugeordnet ist. Demnach ist es insbesondere vorteilhaft, wenn der Federmechanismus einem der ersten Planetenräder zugeordnet ist. Hierdurch kann das Verklemmen bzw. Verspannen zum axialen Fixieren des ersten Sonnenrades gegenüber den ersten Planetenrädern konstruktiv einfach und kostengünstig umgesetzt werden. Auch ist es vorteilhaft, wenn der Federmechanismus ein koaxial zum zugeordneten Planetenrad angeordnetes Verspannrad aufweist. Das Verspannrad ist vorzugsweise relativ zu dem zugeordneten Planetenrad um eine gemeinsame Drehachse zwischen einer Neutralstellung und einer Klemmstellung verdrehbar. In der Klemmstellung ist das zugeordnete Planetenrad über den Federmechanismus in Axialrichtung kraftschlüssig mit dem zugeordneten Gegenrad, nämlich dem Sonnenrad, verbunden.

Vorteilhaft ist es, wenn eine Verzahnung des Verspannrads in der Neutralstellung mit einer Verzahnung des zugeordneten Planetenrades fluchtet. Hierdurch kann sichergestellt werden, dass beim Betreiben des mehrstufigen Planetengetriebes zwischen dem Sonnenrad und den Planetenrädern eine optimale Kraftübertragung erfolgen kann.

Zusätzlich oder alternativ ist es vorteilhaft, wenn die Verzahnung des ersten Verspannrads in der Klemmstellung zu der Verzahnung des zugeordneten Planetenrades einen Zahnversatz aufweist. Vorteilhafterweise kann somit zwischen der Verzahnung des Verspannrades und der Verzahnung des zugeordneten Planetenrades ein Sonnenradzahn des Sonnenrades in Umfangsrichtung kraftschlüssig verspannt werden. Hierdurch kann eine axiale Fixierung des Sonnenrades relativ zu den dazugehörigen Planetenrädern sichergestellt werden.

Um das Sonnenrad zwischen dem Verspannrad und dem dazugehörigen Planetenrad in Umfangsrichtung verspannen zu können, ist es vorteilhaft, wenn der Federmechanismus zumindest ein Federelement aufweist. Das Federelement ist vorzugsweise derart ausgebildet und/oder derart angeordnet, dass das erste Verspannrad in Umfangsrichtung federbeaufschlagt in seine Klemmstellung gedrückt und/oder gegenüber dem Planetenrad verdreht ist.

Der Federmechanismus kann konstruktiv einfach und kostengünstig ausgebildet werden, wenn das Federelement eine Torsionsfeder, Biegefeder und/oder Drehfeder ist. Zusätzlich oder alternativ ist es diesbezüglich vorteilhaft, wenn das Federelement, insbesondere in Axialrichtung und/oder Radialrichtung, zwischen dem Verspannrad und dem zugeordneten Planetenrad angeordnet ist.

Das Verspannrad dient vorzugsweise zum Verspannen des Gegenrades, insbesondere des Sonnenrades, in Umfangsrichtung, so dass dieses in Axialrichtung kraftschlüssig fixiert ist. Im Gegensatz dazu dient das Planetenrad in ordnungsgemäßem Betrieb insbesondere zur Kraftübertragung. Infolgedessen ist es vorteilhaft, wenn das Verspannrad im Vergleich zum zugeordneten Planetenrad eine kleinere Zahnbreite aufweist.

In einer vorteilhaften Weiterbildung der Erfindung ist in der Klemmstellung zumindest ein Sonnenradzahn des ersten Sonnenrades in Umfangsrichtung federbeaufschlagt zwischen einem an einer ersten Zahnflanke des Sonnenradzahns anliegenden Planetenzahn des Planetenrades und einem an der zweiten Zahnflanke des Sonnenradzahns anliegenden Verspannzahn des Verspannrades verspannt. Hierdurch ist der Sonnenradzahn derart formschlüssig in Umfangsrichtung zwischen dem Planetenzahn und dem Verspannzahn verklemmt, dass das Sonnenrad relativ zu den Planetenrädern in Axialrichtung kraftschlüssig fixiert ist und somit als Montageeinheit in das Gehäuse des mehrstufigen Planetengetriebes eingesetzt werden kann. Mit anderen Worten werden die Planetenträger durch den Kraftschluss zusammengehalten, selbst wenn diese senkrecht gehalten bzw. senkrecht in das Hohlrad eingeführt werden. Die Montage vereinfacht sich dadurch, weil nicht darauf geachtet werden muss, dass die Planetenträger sich voneinander lösen oder der bzw. die untere(n) Planetenträger mit dem Sonnenrad aus den Planetenrädern herausrutscht bzw. herausrutschen.

Um eine möglichst hohe axiale Fixierungskraft aufbringen zu können, ist es vorteilhaft, wenn jedem der ersten Planetenräder ein Federmechanismus, insbesondere gemäß der vorangegangenen Beschreibung, zugeordnet ist.

Erfindungsgemäß umfasst die zweite Zahnradgruppe mehrere in dem zweiten Planetenträger drehbar gelagerte zweite Planetenräder und ein mit den zweiten Planetenrädern kämmendes zweites Sonnenrad.

Weiterhin ist es vorteilhaft, wenn die Montageeinheit eine dritte Zahnradgruppe aufweist, die einen drehfest mit dem zweiten Sonnenrad verbundenen dritten Planetenträger und/oder mehrere in dem dritten Planetenträger drehbar gelagerte dritte Planetenräder umfasst.

Um die Zahnradgruppen in Axialrichtung kraftschlüssig als Montageeinheit koppeln zu können, ist es vorteilhaft, wenn die zweite und/oder dritte Zahnradgruppe zumindest einen Federmechanismus aufweist. Der Federmechanismus ist vorzugsweise gemäß der vorangegangenen Beschreibung ausgebildet.

Erfindungsgemäß ist ein zweiter Federmechanismus in der zweiten Zahnradgruppe angeordnet, der das zweite Sonnenrad und zumindest eines der zweiten Planetenräder im Bereich ihrer ineinandergreifenden Verzahnungen derart miteinander verspannt, dass diese in Axialrichtung der Montageeinheit kraftschlüssig miteinander verbunden sind. Vorzugsweise ist dieser zweite Federmechanismus in zumindest einem, vorzugsweise in jedem, zweiten Planetenrad der zweiten Zahnradgruppe angeordnet.

Zusätzlich ist es vorteilhaft, wenn die dritte Zahnradgruppe zumindest einen dritten Federmechanismus aufweist, der im Bereich eines der dritten Planetenräder ausgebildet ist. Vorzugsweise ist jedes der dritten Planetenräder mit einem derartigen Federmechanismus ausgestattet. In einem alternativen Ausführungsbeispiel kann die dritte Zahnradgruppe auch ohne einen derartigen Federmechanismus ausgebildet sein.

Vorteilhaft ist es, wenn der erste und/oder zweite Federmechanismus derart ausgebildet ist, dass die Verzahnungen der ersten und/oder zweiten Planetenräder mittels der Federmechanismen zueinander in Umfangsrichtung so ausgerichtet sind, dass deren Zähne und Zahnnuten in Axialrichtung der Montageeinheit zueinander nahezu fluchten. So ist die Montageeinheit in ein gemeinsames Hohlrad des Gehäuses einschiebbar, ohne dass hierbei in Umfangsrichtung nachjustiert werden muss. Vorteilhafterweise kann hierdurch die Montageeinheit sehr einfach und schnell in das Gehäuse eingesetzt werden. Des Weiteren wird sichergestellt, dass nach dem Einsetzen einer der Zahnradgruppen die nachfolgenden anderen Zahnradgruppen ebenfalls passend zu dem dazugehörigen Hohlrad ausgerichtet sind und infolgedessen problemlos eingeschoben werden können.

Vorgeschlagen wird ferner ein Montageverfahren für ein mehrstufiges Planetengetriebe, insbesondere eines Wankstabilisators eines Kraftfahrzeugs, bei dem mehrere Zahnradgruppen zur Ausbildung zumindest zweier Planetenstufen in ein zumindest ein Hohlrad aufweisendes Gehäuse eingesetzt werden. Das Hohlrad kann hierbei einteilig mit dem Gehäuse ausgebildet sein. Alternativ kann das Hohlrad auch im Vergleich zum Gehäuse ein separates Bauteil sein, das mit dem Gehäuse drehfest verbunden ist. Das Hohlrad weist vorzugsweise mehrere Hohlradbereiche auf, die jeweils für eine Planetenstufe vorgesehen sind. Die Hohlradbereiche weisen zueinander vorzugsweise den gleichen Durchmesser auf. Alternativ können diese aber auch unterschiedliche Durchmesser aufweisen. Die Hohlradbereiche können abgestuft sein, so dass sich ihre Durchmesser im Vergleich zueinander in das Gehäuseinnere hinein verkleinern. Zusätzlich oder alternativ weisen die Hohlradbereiche zueinander eine identische Verzahnung auf. Die Hohlradbereiche sind somit durch ein gemeinsames Hohlrad ausgebildet, das vorzugsweise durch Unterbrechungen in Axialrichtung voneinander getrennte Verzahnungen aufweist. Alternativ können auch mehrere Hohlräder vorhanden sein.

Um eine schnelle Montage des mehrstufigen Planetengetriebes sicherstellen zu können, wird zunächst außerhalb des Gehäuses eine Montageeinheit vormontiert. Die Montageeinheit ist gemäß der vorangegangenen Beschreibung ausgebildet und/oder vormontiert, wobei die genannten Merkmale einzeln oder in beliebiger Kombination vorhanden sein können. Infolgedessen umfasst die Montageeinheit vorzugsweise mehrere Zahnradgruppen. Die Zahnradgruppen sind mittels eines Federmechanismus in Axialrichtung lösbar miteinander verbunden. Infolgedessen bilden diese die vorstehend beschriebene Montageeinheit aus. Die Montageeinheit kann somit anschließend in das Gehäuse eingesetzt werden. Vorteilhafterweise müssen somit die einzelnen Zahnradgruppen nicht mehr separat in das Gehäuse eingesetzt werden. Infolgedessen kann hierdurch die Montage des mehrstufigen Planetengetriebes beschleunigt werden. Des Weiteren kann eine beschädigungsfreie Montage des mehrstufigen Planetengetriebes sichergestellt werden, da die Verzahnungen der Planetenräder aufgrund der Federmechanismen vorzugsweise zueinander annähernd kongruent ausgerichtet sind. Hierdurch kann vermieden werden, dass die Zähne der Planetenräder stirnseitig Zahn auf Zahn auf die Zähne der Hohlräder stoßen, wodurch eine Beschädigung verursacht werden könnte. Unter Verwendung der Montageeinheit im Rahmen des vorstehenden Montageverfahrens ist somit eine sehr schnelle und beschädigungsfreie Montage des mehrstufigen Planetengetriebes sichergestellt.

Vorteilhaft ist es, wenn ein Sonnenrad, insbesondere einer dritten Planetenstufe, vor dem Einsetzen der Montageeinheit bereits im Inneren des Gehäuses vormontiert wird. Die dritten Planetenräder der dritten Planetenstufe werden somit als Teil der Montageeinheit in das Gehäuse eingeführt und auf das bereits im Inneren des Gehäuses auf einer Welle vormontierte dritte Sonnenrad aufgesteckt.

Nachfolgend ist die Erfindung anhand von Zeichnungen näher erläutert. Es zeigen:
- Figur 1a - 1c: die einzelnen Verfahrensschritte eines Montageverfahrens für ein im Querschnitt dargestelltes mehrstufiges Planetengetriebe unter Verwendung einer Montageeinheit,
- Figur 2: eine perspektivische Explosionsdarstellung eines Planetenrades mit einem Federmechanismus zum kraftschlüssigen axialen Fixieren an einem Gegenrad und
- Figur 3: die Montageeinheit gemäß Figur 1b in einer stirnseitigen Ansicht mit einem in Figur 2 dargestellten Federmechanismus.

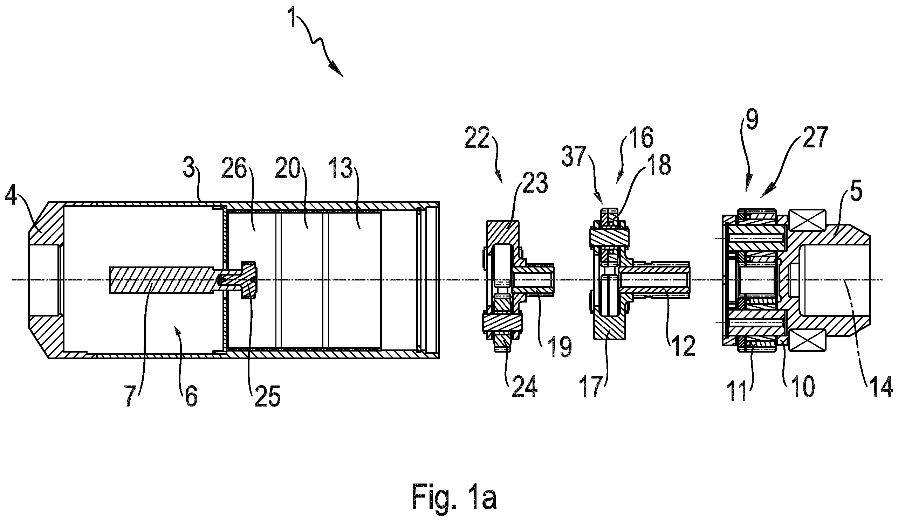

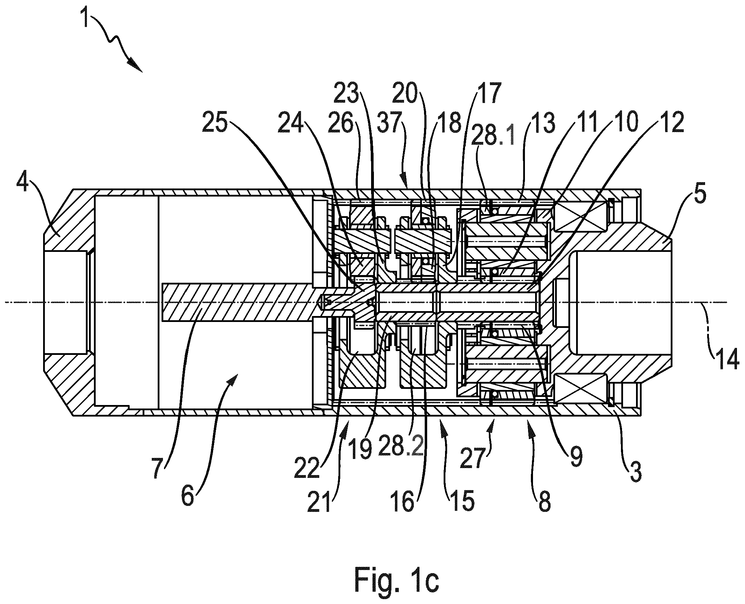

Figur 1a - 1c zeigen die einzelnen Verfahrensschritte eines Montageverfahrens für ein in Figur 1c dargestelltes mehrstufiges Planetengetriebe 1. Das mehrstufige Planetengetriebe 1 ist vorzugsweise für einen Wankstabilisator eines Kraftfahrzeuges vorgesehen. Wie in dem in Figur 1c dargestellten fertig montierten Zustand des mehrstufigen Planetengetriebes 1 hervorgeht, umfasst das Planetengetriebe 1 ein Gehäuse 3. An einem seiner beiden Enden weist das Gehäuse 3 ein erstes Drehstabfederelement 4 auf. Dieses ist drehfest und/oder vorliegend einteilig mit dem Gehäuse 3 ausgebildet. Im Inneren des Gehäuses 3 ist ein Aktor 6 angeordnet, mittels dem eine Antriebswelle 7, insbesondere elektromotorisch, betätigt werden kann. Mit dem Aktor 6 kann ein zweites Drehstabfederelement 5 verdreht werden. Das zweite Drehstabfederelement 5 ist gemäß Figur 1c drehbar im Gehäuse 3 gelagert. Zwischen der Antriebswelle 7 und dem zu verdrehenden zweiten Drehstabfederelement 5 ist das mehrstufige Planetengetriebe 1 zur Wandlung des Drehmoments des Aktors 6 angeordnet.

Wie insbesondere aus dem in Figur 1a dargestellten demontierten Zustand und dem in Figur 1c dargestellten zusammengebauten Zustand des mehrstufigen Planetengetriebes 1 hervorgeht, umfasst dieses eine erste Planetenstufe 8. Die erste Planetenstufe 8 ist teilweise durch eine erste Zahnradgruppe 9 gebildet. Die erste Zahnradgruppe 9 umfasst einen ersten Planetenträger 10 sowie in dem ersten Planetenträger 10 drehbar gelagerte erste Planetenräder 11. Zur Wahrung der Übersichtlichkeit ist nur eines der ersten Planetenräder 11 mit einem Bezugszeichen versehen. Neben der ersten Zahnradgruppe 9 umfasst die erste Planetenstufe 8 des Weiteren ein erstes Sonnenrad 12, das zentral auf einer Getriebedrehachse 14 angeordnet ist und einen ersten Hohlradbereich 13. Der erste Hohlradbereich 13 umgibt das erste Sonnenrad 12. Die ersten Planetenräder 11 sind in Radialrichtung zwischen dem ersten Sonnenrad 12 und dem ersten Hohlradbereich 13 angeordnet und kämmen in diese ein.

Des Weiteren umfasst das mehrstufige Planetengetriebe 1 gemäß Figur 1a und 1c eine zweite Planetenstufe 15. Die zweite Planetenstufe 15 umfasst einen zweiten Planetenträger 17, der Bestandteil einer zweiten Zahnradgruppe 16 ist. Die zweite Zahnradgruppe 16 umfasst neben dem zweiten Planetenträger 17 ferner das erste Sonnenrad 12 der ersten Planetenstufe 8. Der zweite Planetenträger 17 der zweiten Planetenstufe 15 ist drehfest mit dem ersten Sonnenrad 12 der ersten Planetenstufe 8 verbunden. Des Weiteren sind diese in Axialrichtung miteinander verbunden. In dem zweiten Planetenträger 17 sind zweite Planetenräder 18 drehbar gelagert, wobei auch hier aus Gründen der Übersichtlichkeit nur eines dieser zweiten Planetenräder 18 mit einem Bezugszeichen versehen ist. Die zweiten Planetenräder 18 sind Bestandteil der zweiten Zahnradgruppe 16. Des Weiteren bilden diese die zweite Planetenstufe 15 aus. Koaxial zur Getriebedrehachse 14 weist die zweite Planetenstufe 15 ein zweites Sonnenrad 19 auf. Das zweite Sonnenrad 19 ist kein Bestandteil der zweiten Zahnradgruppe 16. Infolgedessen ist die zweite Zahnradgruppe 16 durch den zweiten Planetenträger 17 und die zweiten Planetenräder 18 der zweiten Planetenstufe 15 und durch das erste Sonnenrad 12 der ersten Planetenstufe 8 gebildet. Neben dem zweiten Sonnenrad 19, dem zweiten Planetenträger 17 und den zweiten Planetenrädern 18 umfasst die zweite Planetenstufe 15 ferner einen zweiten Hohlradbereich 20. Der zweite Hohlradbereich 20 umgibt das zweite Sonnenrad 19, wobei die zweiten Planetenräder 18 in Radialrichtung zwischen diesen beiden angeordnet sind und mit diesen kämmen.

Des Weiteren umfasst das mehrstufige Planetengetriebe 1 gemäß Figur 1a und 1c eine dritte Planetenstufe 21. Die dritte Planetenstufe 21 umfasst wie auch die erste und zweite Planetenstufe 8, 15 ein zentrales drittes Sonnenrad 25, einen dieses umgebenden dritten Hohlradbereich 26 sowie zwischen diesen beiden in Radialrichtung angeordnete dritte Planetenräder 24, von denen wiederum aus Gründen der Übersichtlichkeit nur eines mit einem Bezugszeichen versehen ist. Die dritten Planetenräder 24 sind auch im Falle der dritten Planetenstufe 21 von einem dritten Planetenträger 23 gehalten und in diesem drehbar gelagert. Der dritte Planetenträger 23 ist drehfest mit dem zweiten Sonnenrad 19 der zweiten Planetenstufe 15 verbunden. Des Weiteren ist der dritte Planetenträger 24 in Axialrichtung mit dem zweiten Sonnenrad 19 gekoppelt.

Gemäß Figur 1a und 1c umfasst das mehrstufige Planetengetriebe 1 eine dritte Zahnradgruppe 22. Die dritte Zahnradgruppe 22 umfasst den dritten Planetenträger 23 sowie die in diesem drehbar gelagerten dritten Planetenräder 24 der dritten Planetenstufe 21. Des Weiteren umfasst die dritte Zahnradgruppe 22 das zweite Sonnenrad 19 der zweiten Planetenstufe 15. Wie nachstehend noch detailliert erläutert, ist das dritte Sonnenrad 25 im Inneren des Gehäuses 3 bereits vormontiert. Die dritte Zahnradgruppe 22 wird demnach im Rahmen des Montageverfahrens als Teil der Montageeinheit auf das im Inneren des Gehäuses 3 vormontierte dritte Sonnenrad 25 aufgesteckt.

Wie insbesondere aus Figur 1a hervorgeht weisen die Hohlradbereiche 13, 20, 26 zueinander den gleichen Durchmesser auf. Des Weiteren sind deren Verzahnungen zueinander gleich ausgebildet. Die Verzahnungen der Hohlradbereiche 13, 20, 26 sind zueinander in Axialrichtung durch Verzahnungsfreischnitte voneinander getrennt. Die Hohlradbereiche 13, 20, 26 sind einteilig mit dem Gehäuse 3 ausgebildet. Alternativ könnten diese aber auch separate Bauteile sein, die insbesondere drehfest mit dem Gehäuse 3 verbunden sind. Gemäß dem vorliegenden Ausführungsbeispiel bilden die Hohlradbereiche 13, 20, 26 ein gemeinsames Hohlrad 39 aus, das allen Planetenstufen 8, 15, 21 zugeordnet ist.

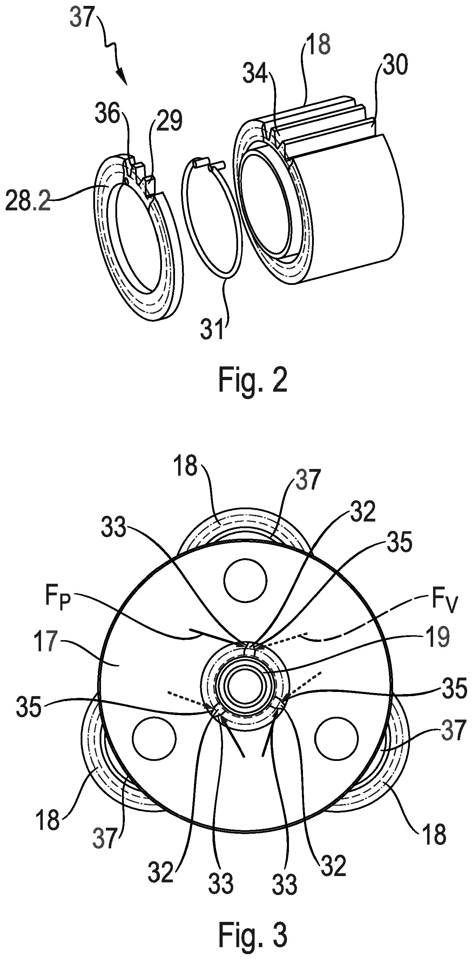

Zur leichteren Montage des mehrstufigen Planetengetriebes 1 umfasst die erste Zahnradgruppe 9 einen ersten Federmechanismus 27. Dieser ist in einer perspektivischen Explosionsdarstellung in Figur 2 im Detail dargestellt. So ist der erste Federmechanismus 27 einem der ersten Planetenräder 11 zugeordnet. Der erste Federmechanismus 27 umfasst ein Verspannrad 28. Dieses ist koaxial zu einer Drehachse des Planetenrades 11 angeordnet. Das Verspannrad 28 kann gegenüber dem Planetenrad 11 zwischen einer Neutralstellung und einer Klemmstellung verdreht werden. In der Neutralstellung fluchtet eine Verzahnung 29 des Verspannrades 28 mit einer Verzahnung 30 des Planetenrades 11. In der Klemmstellung ist das Verspannrad 28 relativ zum Planetenrad 11 derart verdreht, dass deren Verzahnungen 29, 30 zueinander einen Zahnversatz aufweisen.

Gemäß Figur 2 umfasst der Federmechanismus 27 neben dem Verspannrad 28 ferner ein Federelement 31. Das Federelement 31 ist vorliegend als Drehfeder, Biegefeder und/oder Torsionsfeder ausgebildet. Des Weiteren ist das Federelement 31 in Axialrichtung zwischen dem Verspannrad 28 und dem Planetenrad 11 angeordnet. Das Federelement 31 drückt das Verspannrad 28 federbeaufschlagt in seine Klemmstellung.

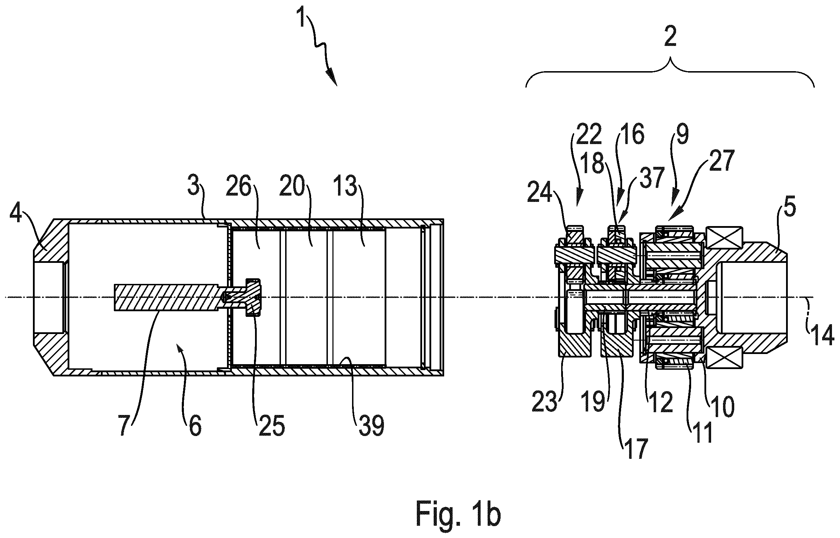

In Figur 3 ist ein Teil einer Montageeinheit 2 stirnseitig in einer Draufsicht auf den Planetenträger der zweiten Zahnradgruppe 16 dargestellt. Die Montageeinheit 2 ist gemäß Figur 1b und 1c zum Einsetzen in das Gehäuse 3 vorgesehen. Das zweite Sonnenrad 19 liegt an sich hinter dem zweiten Planetenträger 17. In Figur 3 ist es jedoch in Durchsicht dargestellt, so dass das Zusammenspiel mit den zweiten Planetenrädern ersichtlich ist. In dem vorliegenden Ausführungsbeispiel ist jedes der zweiten Planetenräder 18 mit einem in Figur 2 im Detail dargestellten Federmechanismus 37 ausgebildet. Infolgedessen liegt jeweils ein erster Sonnenradzahn 32 des zweiten Sonnenrades 19 an seiner ersten Zahnflanke 33 an einem der in Figur 3 nicht sichtbaren Planetenzähne 34 des zugeordneten zweiten Planetenrades 18 und mit seiner zweiten Zahnflanke 35 an einem der Verspannungszähne 36 des zugehörigen Verspannrades 28.2 an. Über das Federelement 31 sind die im Bereich der jeweiligen Planetenräder 18 angeordneten ersten Sonnenradzähne 32 somit in Umfangsrichtung federbeaufschlagt zwischen einem der Planetenzähne 34 und einem der Verspannzähne 36 verklemmt (eingezeichnet sind die wirkenden Kräfte des Verspannrades 28.2 sowie des gegenläufig durch den Federmechanismus verdrehten Planetenrades 18, Fv, F_{P}. Infolgedessen wird das zweite Sonnenrad 19 in Axialrichtung, d.h. in Richtung der Getriebedrehachse 14, kraftschlüssig von dem zweiten Federmechanismus 37 und dem jeweiligen Planetenrad 18 gehalten.

Wie in Figur 1c dargestellt weist gemäß dem vorliegenden Ausführungsbeispiel auch die erste Zahnradgruppe 9 zumindest einen ersten Federmechanismus 27 auf, mittels dem das erste Sonnenrad 12 in Axialrichtung kraftschlüssig mit zumindest einem der ersten Planetenräder 10 gekoppelt ist. Vorzugsweise ist auch im Falle der ersten Zahnradgruppe 9 jedes der Planetenräder 11 mit einem derartigen zweiten Federmechanismus 27 ausgebildet. Der erste Federmechanismus 27 ist hierbei vorzugsweise wie der in Figur 2 und 3 dargestellte und beschriebene zweite Federmechanismus 37 ausgebildet. Infolgedessen verspannen die vorzugsweise in jedem der ersten Planetenräder 11 angeordneten ersten Federmechanismen 27 das erste Sonnenrad 12 und die jeweils mit diesen kämmenden ersten Planetenräder 11 im Bereich ihrer ineinandergreifenden Verzahnungen derart miteinander, dass das erste Sonnenrad 12 in Axialrichtung kraftschlüssig mit den zweiten Planetenrädern 11 gekoppelt ist.

In einem vorliegend nicht dargestellten Ausführungsbeispiel kann auch die dritte Zahnradgruppe 22 zumindest einen dritten Federmechanismus aufweisen, der vorzugsweise gemäß einem oder mehreren der vorstehenden in Bezug auf den ersten und/oder zweiten Federmechanismus 27, 37 erwähnten Merkmale ausgebildet sein kann. Demnach kann auch im Falle der dritten Zahnradgruppe 22 jedes der dritten Planetenräder 24 einen entsprechend ausgebildeten dritten Federmechanismus aufweisen.

In Figur 1a ist das mehrstufige Planetengetriebe 1 in einer Längsschnittdarstellung im demontierten Zustand dargestellt. Demnach befinden sich die erste Zahnradgruppe 9, die zweite Zahnradgruppe 16 und die dritte Zahnradgruppe 22 außerhalb des Gehäuses 3. Zur Montage des mehrstufigen Planetengetriebes 1 müssen die Zahnradgruppen 9, 16, 22 in die jeweils dazugehörigen Hohlradbereiche 13, 20, 26 eingesetzt werden. Im Gehäuseinneren ist das dritte Sonnenrad 25 bereits vormontiert. Das dritte Sonnenrad 25 ist somit drehfest mit der Antriebswelle 7 verbunden. In dem in Figur 1a dargestellten demontierten Zustand ist das erste Sonnenrad 12 von den ersten Planetenrädern 11 entkoppelt. Des Weiteren ist das zweite Sonnenrad 19 von den zweiten Planetenrädern 18 entkoppelt.

Um eine schnelle Montage sicherstellen zu können, werden die Zahnradgruppen 9, 16, 22 über die Federmechanismen, 27, 37, insbesondere den ersten Federmechanismen 27 und/oder den zweiten Federmechanismen 37, in Axialrichtung kraftschlüssig miteinander zu der in Figur 1b dargestellten Montageeinheit 2 verbunden. Die Montageeinheit 2 umfasst demnach gemäß Figur 1b die erste Zahnradgruppe 9, die zweite Zahnradgruppe 16 und die dritte Zahnradgruppe 22. Gemäß dem vorliegenden Ausführungsbeispiel ist der erste Planetenträger 10 drehfest mit dem zweiten Drehstabfederelement 5 verbunden und/oder einteilig mit diesem ausgebildet. Die erste Zahnradgruppe 9 umfasst den ersten Planetenträger 10 und die ersten Planetenräder 11.

Darüber hinaus umfasst die Montageeinheit 2 gemäß Figur 1b die zweite Zahnradgruppe 16, die den zweiten Planetenträger 17, die zweiten Planetenräder 18 sowie das erste Sonnenrad 12 umfasst. Ferner umfasst die Montageeinheit 2 gemäß Figur 1b die dritte Zahnradgruppe 22, die vorliegend den dritten Planetenträger 23, die dritten Planetenräder 24 sowie das zweite Sonnenrad 19 umfasst. Die Montageeinheit 2 umfasst somit mehrere Zahnradgruppen 9, 16, 22, die miteinander in Axialrichtung kraftschlüssig und/oder lösbar verbunden sind, so dass diese als Einheit in das Gehäuse 3 eingesetzt werden können. Die kraftschlüssige Verbindung zwischen den Zahnradgruppen 9, 16, 22 erfolgt, wie bereits vorstehend erläutert, durch zumindest einen Federmechanismus 27, 37.

Hierfür wird die Montageeinheit 2 mit ihrem die dritte Zahnradgruppe 22 aufweisenden Ende in das Gehäuse 3 eingeschoben. Zum Einschieben der Montageeinheit 2 müssen die Zähne der dritten Planetenräder 24 mit den Zahnnuten des ersten Hohlradbereiches 13 fluchtend ausgerichtet werden. Wenn die Montageeinheit 2 in Umfangsrichtung einmal ausgerichtet ist, kann diese vollständig in das Gehäuse 3 eingeschoben werden. Dies ist deshalb möglich, weil aufgrund der Federmechanismen 27, 37 die Planetenräder 11, 18, 24 der jeweiligen Zahnradgruppen 9, 16, 22 zueinander nahezu fluchten und/oder annähernd kongruent ausgerichtet sind. Infolgedessen gelangen beim tieferen axialen Hineinschieben der Montageeinheit 2 auch die Zähne der zweiten Planetenräder 18 - ohne in Umfangsrichtung nachjustiert werden zu müssen - mit den Zähnen des ersten Hohlradbereiches 13 in Eingriff. Gleiches trifft auf die dritten Planetenräder 24 zu. Infolgedessen kann die gesamte Montageeinheit 2 in einem Zug, ohne dabei in Umfangsrichtung erneut nachjustiert werden zu müssen, in das Gehäuse 3 eingeschoben werden, nämlich insbesondere soweit bis die dritten Planetenräder 24 im dritten Hohlradbereich 26, die zweiten Planetenräder 18 im zweiten Hohlradbereich 20 und die ersten Planetenräder 11 im ersten Hohlradbereich 13 positioniert sind (vgl. Figur 1c).

Mit der in Figur 1b dargestellten Montageeinheit 2 und dem vorstehend beschriebenen Montageverfahren kann somit eine sehr schnelle Montage des mehrstufigen Planetengetriebes 1 gewährleistet werden. Des Weiteren wird durch die Ausrichtung der Planetenräder 11, 18, 24 zueinander eine beschädigungsfreie Montage der Zahnradgruppen 9, 16, 22 im Inneren des Gehäuses 3 sichergestellt.

### Bezugszeichen

- 1.: mehrstufiges Planetengetriebe
- 2.: Montageeinheit
- 3.: Gehäuse
- 4.: erstes Drehstabfederelement
- 5.: zweites Drehstabfederelement
- 6.: Aktor
- 7.: Antriebswelle
- 8.: erste Planetenstufe
- 9.: erste Zahnradgruppe
- 10.: erster Planetenträger
- 11.: erste Planetenräder
- 12.: erstes Sonnenrad
- 13.: erster Hohlradbereich
- 14.: Getriebedrehachse
- 15.: zweite Planetenstufe
- 16.: zweite Zahnradgruppe
- 17.: zweiter Planetenträger
- 18.: zweite Planetenräder
- 19.: zweites Sonnenrad
- 20.: zweiter Hohlradbereich
- 21.: dritte Planetenstufe
- 22.: dritte Zahnradgruppe
- 23.: dritter Planetenträger
- 24.: dritte Planetenräder
- 25.: drittes Sonnenrad
- 26.: dritter Hohlradbereich
- 27.: erster Federmechanismus
- 28.: Verspannrad
- 29.: Verzahnung des Verspannrads
- 30.: Verzahnung des Planetenrades
- 31.: Federelement
- 32.: erster Sonnenradzahn
- 33.: ersten Zahnflanke
- 34.: Planetenzahn
- 35.: zweiten Zahnflanke
- 36.: Verspannzahn
- 37.: zweiter Federmechanismus
- 39.: gemeinsames Hohlrad
- F_{V}: Kraft Verspannrad
- F_{P}: Kraft Planetenrad

## Patentansprüche

1. Montageeinheit (2) zum Einsetzten in ein Gehäuse (3) eines mehrstufigen Planetengetriebes (1), insbesondere eines Wankstabilisators eines Kraftfahrzeugs, mit einer ersten Zahnradgruppe (9), die einen ersten Planetenträger (10) und mehrere in dem ersten Planetenträger (10) drehbar gelagerte erste Planetenräder (11) umfasst, und einer zweiten Zahnradgruppe (16), die ein mit den ersten Planetenrädern (11) kämmendes erstes Sonnenrad (12) und einen drehfest mit dem ersten Sonnenrad (12) verbundenen zweiten Planetenträger (17) umfasst, wobei die Montageeinheit (2) zumindest einen Federmechanismus (27) aufweist, der die beiden Zahnradgruppen (9, 16) im Bereich der ineinandergreifenden Verzahnungen des ersten Sonnenrads (12) und zumindest eines der ersten Planetenräder (11) derart miteinander verspannt, dass die beiden Zahnradgruppen (9, 16) in Axialrichtung der Montageeinheit (2) kraftschlüssig miteinander verbunden sind, **dadurch gekennzeichnet, dass** die zweite Zahnradgruppe (16) mehrere in dem zweiten Planetenträger (17) drehbar gelagerte zweite Planetenräder (18) und ein mit den zweiten Planetenrädern (18) kämmendes zweites Sonnenrad (19) umfasst, wobei die zweite Zahnradgruppe (16) zumindest einen zweiten Federmechanismus (37) aufweist, der das zweite Sonnenrad (19) und zumindest eines der zweiten Planetenräder (18) im Bereich ihrer ineinandergreifenden Verzahnungen derart miteinander verspannt, dass diese in Axialrichtung der Montageeinheit kraftschlüssig miteinander verbunden sind.

2. Montageeinheit nach dem vorherigen Anspruch, **dadurch gekennzeichnet, dass** der Federmechanismus (27) einem Planetenrad (11) zugeordnet ist und/oder zumindest ein koaxial zum zugeordneten Planetenrad (11) angeordnetes Verspannrad (28.1) aufweist, das relativ zu dem zugeordneten Planetenrad (11) um eine gemeinsame Drehachse zwischen einer Neutralstellung und einer Klemmstellung verdrehbar ist.

3. Montageeinheit nach Anspruch 2, **dadurch gekennzeichnet, dass** eine Verzahnung (29) des Verspannrads (28.1) in der Neutralstellung mit einer Verzahnung (30) des zugeordneten Planetenrades (11) fluchtet und/oder in der Klemmstellung zu diesem einen Zahnversatz aufweist.

4. Montageeinheit nach einem der Ansprüche 2 oder 3, **dadurch gekennzeichnet, dass** der Federmechanismus (27) zumindest ein Federelement (31) aufweist, das das Verspannrad (28.1) in Umfangsrichtung federbeaufschlagt in seine Klemmstellung drückt und/oder gegenüber dem Planetenrad verdreht ist.

5. Montageeinheit nach Anspruch 4, **dadurch gekennzeichnet, dass** das Federelement (31) eine Drehfeder und/oder Biegefeder ist und/oder zwischen dem Verspannrad (28.1) und dem zugeordneten Planetenrad (11) angeordnet ist.

6. Montageeinheit nach einem der Ansprüche 2 bis 5, **dadurch gekennzeichnet, dass** in der Klemmstellung zumindest ein Sonnenradzahn (32) des zugeordneten Sonnenrades (12) in Umfangsrichtung federbeaufschlagt zwischen einem an einer ersten Zahnflanke (33) des Sonnenradzahns (32) anliegenden Planetenzahns (34) des Planetenrads (11) und einem an der zweiten Zahnflanke (35) des Sonnenradzahns (32) anliegenden Verspannzahns (36) des Verspannrads (28.1) verspannt ist.

7. Montageeinheit nach einem der Ansprüche 1 bis 6, **dadurch gekennzeichnet, dass** jedem der ersten Planetenräder (11, 18, 24) ein Federmechanismus (27) zugeordnet ist.

8. Montageeinheit nach einem der Ansprüche 1 bis 7, **dadurch gekennzeichnet, dass** die Montageeinheit (2) eine dritte Zahnradgruppe (22) aufweist, die einen drehfest mit dem zweiten Sonnenrad (19) verbundenen dritten Planetenträger (23) und mehrere in dem dritten Planetenträger (23) drehbar gelagerte dritte Planetenräder (24) umfasst.

## Claims

1. Mounting unit (2) for inserting into a housing (3) of a multiple-stage planetary gear mechanism (1), in particular of an anti-roll bar of a motor vehicle, with a first gearwheel group (9) which comprises a first planetary carrier (10) and a plurality of first planetary gears (11) which are mounted rotatably in the first planetary carrier (10), and with a second gearwheel group (16) which comprises a first sun gear (12), which meshes with the first planetary gears (11), and a second planetary carrier (17) which is connected fixedly to the first sun gear (12) for conjoint rotation, the mounting unit (2) having at least one spring mechanism (27) which braces the two gearwheel groups (9, 16) to one another in the region of the meshing toothing systems of the first sun gear (12) and at least one of the first planetary gears (11) in such a way that the two gearwheel groups (9, 16) are connected to one another in a non-positive manner in the axial direction of the mounting unit (2), **characterized in that** the second gearwheel group (16) comprises a plurality of second planetary gears (18), which are mounted rotatably in the second planetary carrier (17), and a second sun gear (19) which meshes with the second planetary gears (18), the second gearwheel group (16) having at least one second spring mechanism (37) which braces the second sun gear (19) and at least one of the second planetary gears (18) to one another in the region of their meshing toothing systems in such a way that they are connected to one another in a non-positive manner in the axial direction of the mounting unit.

2. Mounting unit according to the preceding claim, **characterized in that** the spring mechanism (27) is assigned to a planetary gear (11) and/or has at least one bracing gear (28.1) which is arranged coaxially with respect to the associated planetary gear (11) and can be rotated relative to the associated planetary gear (11) about a common rotational axis between a neutral position and a clamped position.

3. Mounting unit according to Claim 2, **characterized in that** a toothing system (29) of the bracing gear (28.1) is aligned with a toothing system (30) of the associated planetary gear (11) in the neutral position and/or has a tooth offset with respect to it in the clamped position.

4. Mounting unit according to either of Claims 2 or 3, **characterized in that** the spring mechanism (27) has at least one spring element (31) which presses the bracing gear (28.1) into its clamped position in a spring-loaded manner in the circumferential direction and/or is rotated with respect to the planetary gear.

5. Mounting unit according to Claim 4, **characterized in that** the spring element (31) is a torsion spring and/or bending spring and/or is arranged between the bracing gear (28.1) and the associated planetary gear (11).

6. Mounting unit according to one of Claims 2 to 5, **characterized in that**, in the clamped position, at least one sun gear tooth (32) of the associated sun gear (12) is braced in a spring-loaded manner in the circumferential direction between a planetary tooth (34), bearing against a first tooth flank (33) of the sun gear tooth (32), of the planetary gear (11) and a bracing tooth (36), bearing against the second tooth flank (35) of the sun gear tooth (32), of the bracing gear (28.1).

7. Mounting unit according to one of Claims 1 to 6, **characterized in that** each of the first planetary gears (11, 18, 24) is assigned a spring mechanism (27).

8. Mounting unit according to one of Claims 1 to 7, **characterized in that** the mounting unit (2) has a third gearwheel group (22) which comprises a third planetary carrier (23), which is connected fixedly to the second sun gear (19) for conjoint rotation, and a plurality of third planetary gears (24) which are mounted rotatably in the third planetary carrier (23).

## Revendications

1. Unité de montage (2) destinée à être insérée dans un boîtier (3) d'un engrenage planétaire à plusieurs étages (1), notamment d'un stabilisateur de roulis d'un véhicule automobile, comprenant un premier groupe de roues dentées (9) qui comprend un premier porte-satellites (10) et plusieurs premiers satellites (11) montés à rotation dans le premier porte-satellites (10), et un deuxième groupe de roues dentées (16) qui comprend une première roue solaire (12) engrenant avec les premiers satellites (11) et un deuxième porte-satellites (17) relié de manière solidaire en rotation à la première roue solaire (12), l'unité de montage (2) présentant au moins un mécanisme à ressort (27) qui serre les deux groupes de roues dentées (9, 16) l'un avec l'autre dans la zone des dentures engagées les unes dans les autres de la première roue solaire (12) et d'au moins l'un des premiers satellites (11) de telle sorte que les deux groupes de roues dentées (9, 16) sont reliés entre eux par adhérence dans la direction axiale de l'unité de montage (2), **caractérisé en ce que** le deuxième groupe de roues dentées (16) comprend plusieurs deuxièmes satellites (18) montés à rotation dans le deuxième porte-satellites (17) et une deuxième roue solaire (19) engrenant avec les deuxièmes satellites (18), le deuxième groupe de roues dentées (16) présentant au moins un deuxième mécanisme à ressort (37) qui serre l'un avec l'autre la deuxième roue solaire (19) et au moins l'un des deuxièmes satellites (18) dans la zone de leurs dentures engagées les unes dans les autres de telle sorte que ceux-ci sont reliés entre eux par adhérence dans la direction axiale de l'unité de montage.

2. Unité de montage selon la revendication précédente, **caractérisée en ce que** le mécanisme à ressort (27) est associé à un satellite (11) et/ou présente au moins une roue de serrage (28.1) agencée coaxialement au satellite associé (11), qui peut tourner par rapport au satellite associé (11) autour d'un axe de rotation commun entre une position neutre et une position de blocage.

3. Unité de montage selon la revendication 2, **caractérisée en ce qu'**une denture (29) de la roue de serrage (28.1) est alignée dans la position neutre avec une denture (30) du satellite associé (11) et/ou présente un décalage de denture par rapport à celle-ci dans la position de blocage.

4. Unité de montage selon l'une quelconque des revendications 2 ou 3, **caractérisée en ce que** le mécanisme à ressort (27) présente au moins un élément à ressort (31) qui pousse la roue de serrage (28.1) dans sa position de blocage sous l'action d'un ressort dans la direction circonférentielle et/ou qui est tourné par rapport au satellite.

5. Unité de montage selon la revendication 4, **caractérisée en ce que** l'élément à ressort (31) est un ressort de torsion et/ou un ressort de flexion et/ou est agencé entre la roue de serrage (28.1) et le satellite associé (11).

6. Unité de montage selon l'une quelconque des revendications 2 à 5, **caractérisée en ce que**, dans la position de blocage, au moins une dent de roue solaire (32) de la roue solaire associée (12) est serrée sous l'action d'un ressort dans la direction circonférentielle entre une dent de satellite (34) du satellite (11) s'appliquant contre un premier flanc de dent (33) de la dent de roue solaire (32) et une dent de serrage (36) de la roue de serrage (28) s'appliquant contre le deuxième flanc de dent (35) de la dent de roue solaire (32).

7. Unité de montage selon l'une quelconque des revendications 1 à 6, **caractérisée en ce qu'**un mécanisme à ressort (27) est associé à chacun des premiers satellites (11, 18, 24).

8. Unité de montage selon l'une quelconque des revendications 1 à 7, **caractérisée en ce que** l'unité de montage (2) présente un troisième groupe de roues dentées (22), qui comprend un troisième porte-satellites (23) relié de manière solidaire en rotation à la deuxième roue solaire (19) et plusieurs troisièmes satellites (24) montés à rotation dans le troisième porte-satellites (23) .
